# EUROPEAN PATENT SPECIFICATION

(11) **EP 1 387 470 B1**
(45) Date of publication and mention of the grant of the patent: **06.11.2013**
(21) Application number: 02425514.3
(22) Date of filing: 02.08.2002
(51) Int. Cl.: H02K 15/095

(54) **Method and apparatus for winding multipole cores of electrical machines**
Verfahren und Vorrichtung zum Wicklen mehrpoliger elektrischer Maschinen
Procédé et dispositif pour enrouler des machines électriques multipolaires

(43) Date of publication of application: 04.02.2004
(73) Proprietor: ATOP S.p.A., 50021 Barberino Val d'Elsa (Firenze) (IT)
(72) Inventor: Ponzio, Massimo, 50021 Barberino V. Elsa (FI) (IT); Cugnigni, Massimo, 50028 Tavarnelle Val di Pesa (IT)
(74) Representative: Celestino, Marco

(56) References cited:
- DE-B- 1 015 912
- US-A- 2 409 394
- US-A- 4 340 186
- US-A- 4 616 788
- US-A- 6 079 659
- PATENT ABSTRACTS OF JAPAN vol. 007, no. 258 (E-211), 17 November 1983 (1983-11-17) & JP 58 144562 A (HITACHI KOKI KK), 27 August 1983 (1983-08-27)

## Description

### Field of the invention

The present invention relates to the field of winding multi-pole cores of electrical machines, in particular stators or armatures, and precisely it relates to a method for winding such cores.

Furthermore, the invention relates to an apparatus that carries out this method.

### Background of the invention

As known, multi-pole stators exist formed by a substantially star-shaped stack of sheets featuring a plurality of poles extending from a tubular core. The stators of this type are suitable for coupling with an inner concentric armature or outer ring armature. they are common in brushless motors.

Also the armatures of electric motors have a similar configuration with stack of sheets, even if with different proportions and with different arrangement of the coils of wire.

The peripheries of the poles, or pole extensions, form substantially a cylinder with a plurality of slits parallel or oblique with respect to the axis of the core. The peripheries of the poles are connected to the core by means of pole walls that define corresponding grooves, accessible through the slits. The grooves have to be filled with insulated lead wire, by creating coils spooled about the pole walls.

At winding, where possible, the wire must pass necessarily through the slits for entering the grooves, and has to be guided to avoid collisions against the edges of the grooves. To this purpose, winding machines exist having an winding arm, or flier, which rotates causing the wire to follow a circular trajectory and creating thus the coil of each pole. The wire follows the circular trajectory while it is guided in the slits, at the sides of each pole, by means of special winding shrouds having round profile, normally of two types:
- a couple of lateral guiding plates, which form substantially a channel that aids the wire to enter the slits; hits are thus avoided of the wire against the edges of the poles adjacent to the pole being wound;
- a shroud that allows the wire to overtake the pole forming substantially a double slide guide that deviates the wire from its own circular trajectory and brings it to wind about the pole wall; the shroud normally is movable towards/away from the axis of the stator, for laying uniformly the wire helically about the pole wall, and moves beyond the guiding plates and the boundary of the pole.

The two types of shrouds are normally sufficient to wind most of the common types of multi-pole stators that can be wound by a flier-type machine.

The shroud can be in one or in two parts. In the first case, it has a central opening in which the pole can enter. This is used when the width of the pole is similar to that of the winding and the slits are wide enough to allow its passage. In the second case, the shroud comprises two halves that are closed after having passed the slits at the end of the approaching movement. Also in this case, the width of the pole is similar to that of the coil but the slits are as narrow as possible, for improving the performances of the motor.

In many cases, high speed winding of cores of this type is difficult or sometimes impossible with the shrouds according to the prior art. In fact, in a 360° turn of the flier, the wire passes two times, alternately, from a first condition in which it slides against the lateral guiding plate and against the shroud (at the right and left sides of the pole of the stator), to a second condition where it slides only on the shrouds (above and below the pole). This causes a difference of kinetics on the wire in the two conditions, so that, at high speed, in the passage from the first to the second condition, the wire can detach from the shroud.

If detachment occurs from the correct trajectory, the spooled coil is irregular with empty spaces. Therefore, to limit the risks of a wrong winding, it is necessary to operate below an upper limit of winding speed, thus reducing substantially the maximum productivity of the winding process.

Examples of such a machine having the above described drawbacks are disclosed in DE1015912, in US4340186 and shown in figures 1 and 2 of the present application.

### Summary of the invention

It is therefore object of the present invention to provide a method for winding outwardly spooled multi-pole cores that provides an optimal filling of the slits even at high winding speed, increasing productivity of the winding process.

It is another object of the present invention to provide a multi-pole cores winding machine having an auxiliary device that allows winding the wire about the core poles co-operating with the shroud.

According to a first aspect of the invention, a method for winding multi-pole cores formed by a stack of ferromagnetic sheets with a plurality of radial poles comprises the steps of:
- prearranging a shroud at a pole extension;
- prearranging an outer shield having an aperture located at the pole extension, that can be crossed by said shroud, said shield consisting in a single part, or in more adjacent parts arranged in order to define substantially said aperture;
- combining the shroud and the shield so that the boundary of the aperture and the external edges of the shroud define a frame-shaped slot within which the wire is forced;
- winding the wire about the pole following forced trajectories in said frame-shaped slot.

Therefore, at winding, the wire is guided by the combined action of the shroud and the shield in order to have no discontinuity along the winding trajectory.

Advantageously, the shroud can be movable radially with alternated movement towards/away from the core, for overlapping to the respective pole and carrying out the winding step by the flier, said alternated movement occurring through said aperture.

According to another aspect of the invention, a machine for winding said multi-pole cores comprises at least a winding arm, or flier, and a shroud that overlaps the respective pole so that the flier spools the wire about the pole same, said winding machine having the characteristic that it comprises furthermore:
- a shield having an aperture crossed by the shroud so that the boundary of the aperture of the shield and the external edges of the shroud define a frame-shaped slot within which the wire is forced at winding wherein said shield consisting in a single part, or in more adjacent parts arranged in order to define substantially said aperture.

Preferably, the shield has a first and a second opposing faces communicating through said aperture. In particular, during the winding step the first face of the shield is opposite to the core being wound and the second face is oriented towards the core to be wound, the wire sliding on said first face and against the external edges of said aperture.

Advantageously, such two or more adjacent parts can be moved towards/away from each other. In particular, such parts can approach each other for carrying out the winding step and then can separate from each other for allowing other winding steps, for example, the termination or the unloading/loading.

Furthermore, the shield according to the invention, in certain cases, can be movable radially, for detaching more or less from the pole for particular winding phases.

Advantageously, the shield is a block on whose second face a recess is made in which the poles are housed that are adjacent to the processed pole, said recess allowing the indexing of the stator.

Advantageously, the boundary of the aperture of the shield has a rounded profile to avoid damaging the wire at winding.

### Brief description of the drawings

Further characteristics and the advantages of the method and the device according to the invention for winding multi-pole cores will be made clearer with the following description of an embodiment thereof, exemplifying but not limitative, with reference to the attached drawings, wherein:
- figures 1 and 2 are respectively a perspective elevational side view and a perspective view from the above of a winding step of a multi-pole stator according to the prior art, comprising a shroud and two lateral winding plates;
- figures 3 and 4 are respectively side and frontal perspective view from the above of a winding step of a multi-pole stator executed with the method according to the invention;
- figure 5 is an elevational front view of the shield according to the invention;
- figure 6 is a rear view of the shield of figure 5 for enhancing the longitudinal recess in which the poles are housed adjacent to the pole extension subject to winding;
- figure 7 shows an elevational front view of a alternative embodiment of the shield of figure 5;
- figure 8 shows in a perspective elevational side view from the above of the possibility of radial movement of the shield according to an alternative embodiment.

### Description of a preferred embodiment

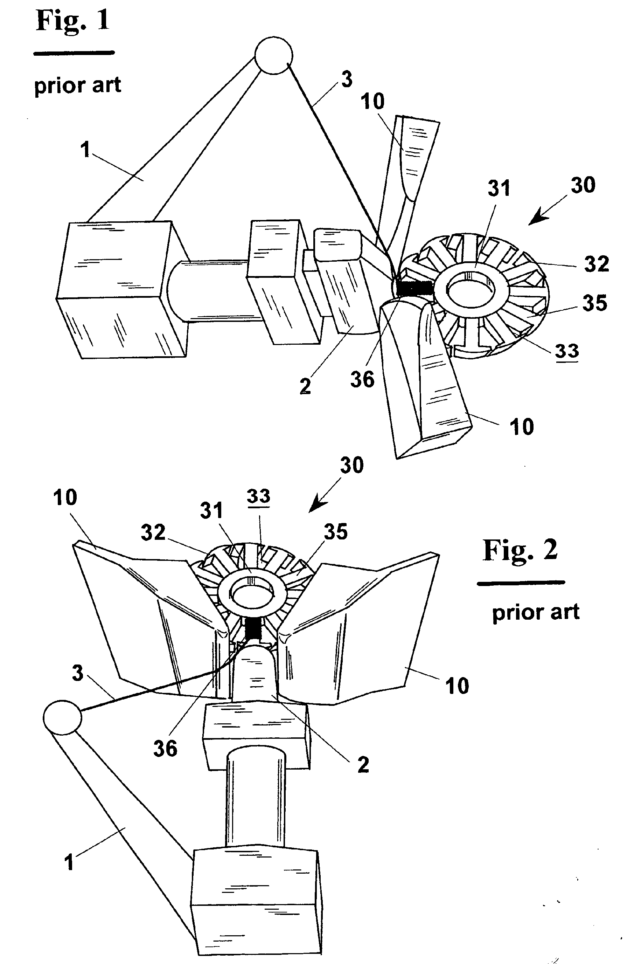

With reference to figures 1 and 2, according to the prior art, a multi-pole core 30, for example, a stator, is formed by a stack of ferromagnetic sheets having a central body 31 and a plurality of pole extensions 32 that radially extend defining grooves between them 33. The pole extensions 32 are connected to the body 31 by means of pole walls 35.

Always according to the prior art, a machine for winding stator 30 comprises a flier 1 that rotates spooling the wire 3 about the pole wall 35 and creating thus the coil 36 for each pole 32. More precisely, during the winding step, the wire 3 spooled by the flier 1 is guided by a shroud 2 that overlaps the pole 35 in order to deviate the wire 3 from its own circular trajectory and guide it to wind about the pole wall 35.

Furthermore, for aiding the wire 3 to enter the grooves 33 without that the wire 3 same hits against the edges of the poles adjacent to the pole extension 32, shroud 2 is associated to a couple of lateral guiding plates 10.

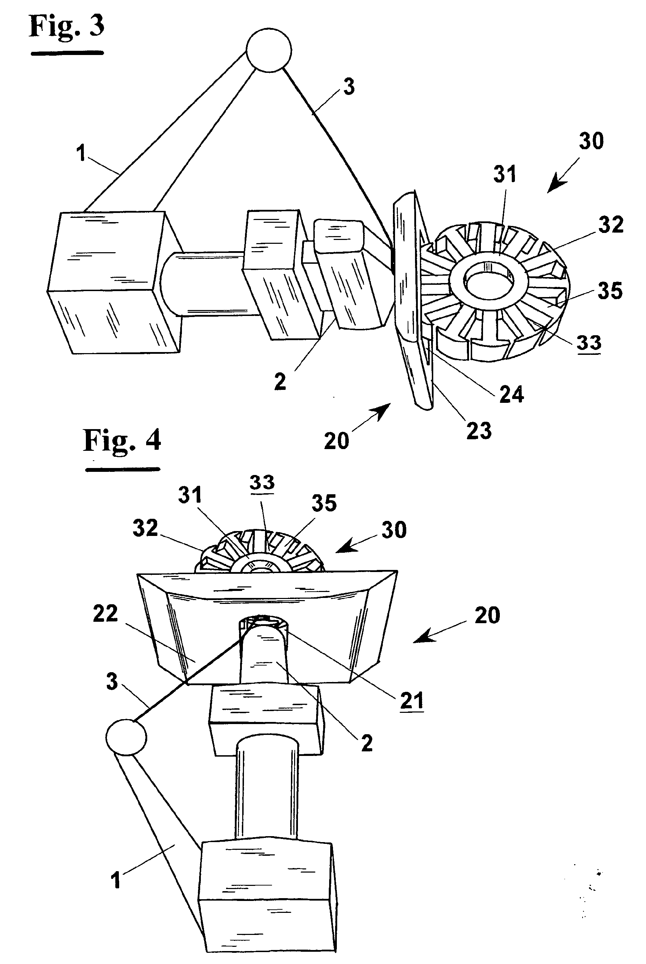

In figures 3 and 4 is shown, instead, a stator winding machine 30, according to the invention, wherein the device that guides the wire 3 about the pole 32 at winding comprises a shroud 2 associated to a shield 20 having an aperture 21, in particular a through hole.

When winding a pole 32 of a stator 30, shroud 2 is located in order to cross the aperture 21 of shield 20. This combination of shroud 2 and shield 20 causes the boundary of the aperture 21 of shield 20 and the external edges of shroud 2 to define a frame-shaped slot within which the wire 3 is forced at winding.

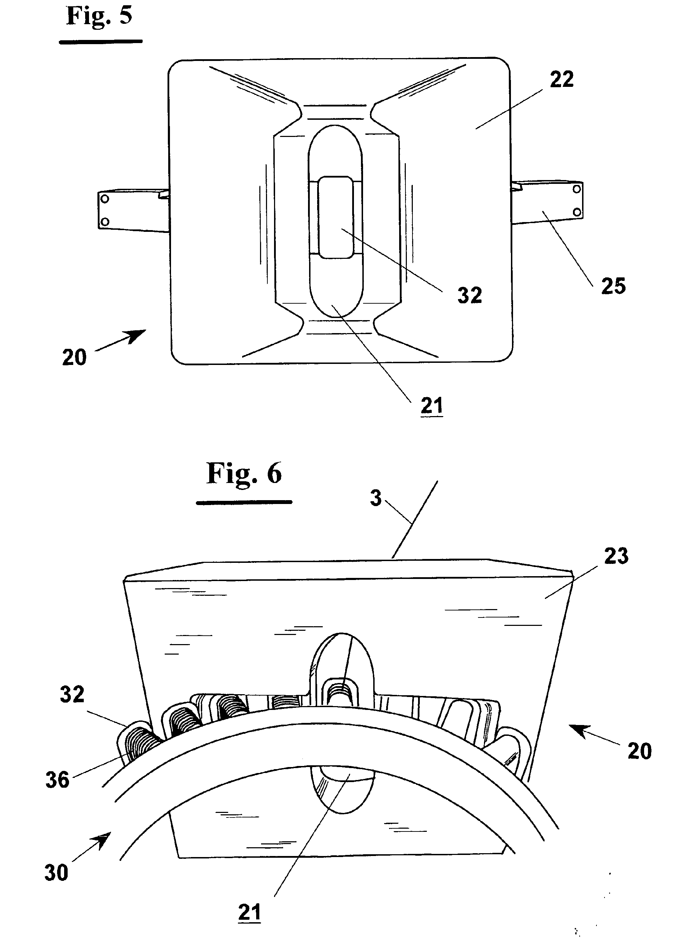

As shown in detail in figures 5 and 6, shield 20 has a first face 22 and a second face 23 opposed to each other and communicating through the aperture 21. Therefore, during the winding step the first face 22 of shield 20 is located opposite to the body of stator 30 being wound, whereas second face 23 is oriented towards the body of stator 30. In particular, the boundary of aperture 21 of shield 20 has a rounded profile to avoid damaging the wire 3 at winding.

Since at winding the wire 3 is stretched and describes circular trajectories, at high winding speed shield 20 is subject to relevant stresses and actions. Therefore, to avoid that shield 20 is deformed or damaged, it is necessary that it is made of a metal block of suitable thickness and connected by means of supports 25 to a basement.

Owing to the thickness, in second face 23 of shield 20 a recess 24 can be made in which the poles adjacent to the processed pole 32 are housed.

The continuity of the shield avoids that during winding there are sudden changes in the wire from a condition supported by the guiding plates to a condition supported only on the shroud. This way can be spooled coils at a high speed.

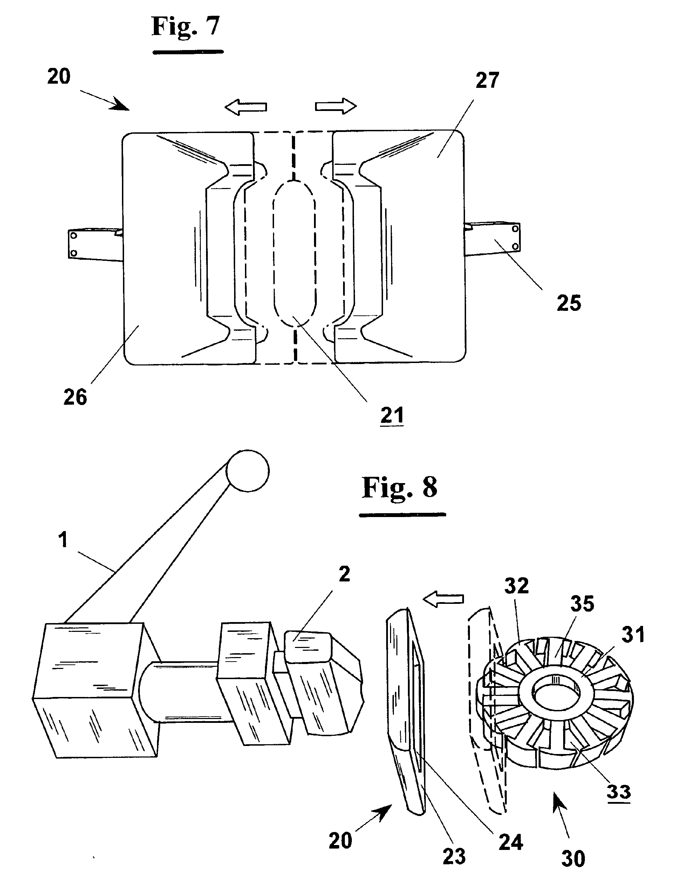

The continuity is not discontinued even if the shield consists in more parts. In an alternative embodiment (figure 7), in fact, shield 20 consists in more parts, in particular two halves 26 and 27, arranged in order to define substantially an aperture 21. Always as shown in figure 7, the two halves 26 and 27 can approach each other for carrying out the winding step and then separate from each other for allowing other steps, for example, the termination or the unloading/loading.

Notwithstanding reference has been made to a shield in one or more parts defining a hole, it is not excluded that there is discontinuity in the guide of the wire, provided that it is slight and practically not felt by the wire, and the shield defines an aperture where the shroud can engage.

Finally, shield 20 according to the invention, in certain cases, can be movable radially (figure 8), for detaching more or less from the pole 32 for particular winding phases.

## Claims

1. Method for winding multi-pole cores formed by a stack of ferromagnetic sheets with a plurality of radial poles **characterised in that** it comprises the steps of:
- prearranging a shroud (2) at a pole extension (32);
- prearranging an outer shield (20) having an aperture (21) located at said pole extension (32), that can be crossed by said shroud (2), said shield (20) consisting in a single part, or in more adjacent parts (26,27) arranged in order to define substantially said aperture (21);
- combining said shroud (2) and said shield (20) so that the boundary of said aperture (21) and the external edges of said shroud (2) define a frame-shaped slot within which the wire (3) is forced;
- winding said wire (3) about said pole, said wire (3) following forced trajectories within said frame-shaped slot.

2. Method for winding multi-pole cores, according to claim 1, wherein said shroud (2) is movable radially, with alternated movement towards/away from the core for overlapping to the respective pole and carrying out the winding step owing to the rotation of the flier, said alternated movement occurring through said aperture (21).

3. Machine for winding multi-pole cores comprising at least a flier and a shroud (2) that overlaps the respective pole so that the flier spools the wire (3) about said pole **characterised in that** it comprises:
- a shield (20) having an aperture (21) crossed by said shroud (2) so that the boundary of the aperture (21) of said shield (20) and the external edges of said shroud (2) define a frame-shaped slot within which the wire (3) is forced at winding, wherein said shield (20) consisting in a single part, or in more adjacent parts (26,27) arranged in order to define substantially said aperture (21).

4. Machine for winding multi-pole cores, according to claim 3, wherein said shield (20) has a first and a second opposing faces (22,23) communicating through said aperture (21); during the winding step said first face (22) of said shield (20) being opposite to said core being wound and said second face (23) being oriented towards said core to be wound, said wire (3) sliding on said first face (22) and against the external edges of said aperture (21).

5. Machine for winding multi-pole cores, according to claim 3, wherein said adjacent parts (26,27) are movable towards/away from each other.

6. Machine for winding multi-pole cores, according to claim 3, wherein said shield (20) is movable radially with respect to the core, for detaching more or less from the pole for particular winding phases.

7. Machine for winding multi-pole cores, according to claim 4, wherein said shield (20) is a block on whose second face (23) a recess (24) is made in which the poles (32) are housed adjacent to the processed pole (32).

8. Machine for winding multi-pole cores, according to claim 3, wherein said boundary of said aperture (21) of said shield (20) has a rounded profile to avoid damaging the wire (3) at winding.

## Patentansprüche

1. Verfahren zum Bewickeln von Mehrpolkernen, welche durch einen Stapel von ferromagnetischen Schichten gebildet sind und eine Mehrzahl von radialen Polen aufweisen, **dadurch gekennzeichnet, dass** das Verfahren die folgenden Schritte aufweist:
- Vorsehen eines Kragens (2) an einer Polverlängerung (32);
- Vorsehen einer äusseren Blende (20) mit einer Öffnung (21), welche an der Polverlängerung (32) angeordnet ist und welche von dem Kragen (2) überkreuzt werden kann, wobei die Blende (20) aus einem einzelnen Teil besteht oder aus mehreren benachbarten Teilen (26, 27) besteht, welche so angeordnet sind, um im Wesentlichen die besagte Öffnung (21) zu definieren;
- Kombinieren des Kragens (2) und der Blende (20) derart, dass die Grenzen der Öffnung (21) und die äusseren Kanten des Kragens (2) einen rahmenähnlichen Schlitz bilden, in welchen der Draht (3) gezwängt wird;
- Wickeln des Drahtes (3) um den Pol, wobei der Draht (3) erzwungen Pfaden innerhalb des rahme ähnlichen Schlitzes folgt.

2. Verfahren zum Bewickeln von Mehrpolkernen gemäss Anspruch 1, wobei der Kragen (2) mit einer alternierenden Bewegung zum Kern hin und vom Kern weg radial bewegbar ist, um den entsprechenden Pol zu überlappen und den Wickelschritt aufgrund der Rotation eines Flyers auszuüben, wobei die alternierende Bewegung durch besagte Öffnung (21) erfolgt.

3. Maschine zum Bewickeln von Mehrpolkernen enthaltend wenigstens einen Flyer und einen Kragen (2), welcher die entsprechenden Pole überlappt, sodass der Flyer den Draht um den Pol wickelt, **dadurch gekennzeichnet, dass** die Maschine enthält:
- eine Blende (20) mit einer Öffnung (21), welche durch den Kragen (2) gekreuzt wird, sodass die Grenze der Öffnung 21) der Blende (20) und die äusseren Kanten des Kragens (2) einen rahmenartigen Schlitz definieren, in welchen der Draht (3) beim Wickeln gezwängt wird, wobei die Blende (20) aus einem einzelnen Teil besteht oder aus mehreren benachbarten Teilen (26, 27) besteht, welche so angeordnet sind, um im Wesentlichen die Öffnung (21) zu bilden.

4. Maschine zum Bewickeln von Mehrpolkernen gemäss Anspruch 3, wobei die Blende (20) erste und zweite einander gegenüberliegende Seiten (22, 23) aufweist, welche durch die Öffnung (21) miteinander kommunizieren; wobei während dem Wickelschritt die erste Seite (22) der Blende (20) dem bewickelten Kern abgewandt und die zweite Seite (23) gegen den zu bewickelnden Kern gerichtet ist, wobei der Draht (3) auf der ersten Seite (22) und gegen die äusseren Kanten der Öffnung (21) gleitet.

5. Maschine zum Bewickeln von Mehrpolkernen gemäss Anspruch 3, wobei die benachbarten Teile (26, 27) voneinander weg und zueinander hin bewegbar sind.

6. Maschine zum Bewickeln von Mehrpolkernen gemäss Anspruch 3, wobei die Blende (20) radial bezogen auf den Kern bewegbar ist, um sich für bestimmte Wickelphasen mehr oder weniger vom Pol ablösen.

7. Maschine zum Bewickeln von Mehrpolkernen gemäss Anspruch 4, wobei die Blende (20) ein Block ist, auf dessen zweiter Seite (23) eine Vertiefung (24) vorgesehen ist, in welcher die Pole (32) benachbart zum bearbeiteten Pol (32) angeordnet sind.

8. Maschine zum Bewickeln von Mehrpolkernen gemäss Anspruch 3, wobei die Grenze der Öffnung (21) der Blende (20) ein abgerundetes Profil hat, um eine Beschädigung des Drahtes (3) beim Wickeln zu vermeiden.

## Revendications

1. Procédé pour l'enroulement des noyaux à pôles multiples formés par une pile de feuilles ferromagnétiques avec une pluralité de pôles radiaux **caractérisé en ce qu'**il comprend les étapes consistant à :
- pré-disposer un voile (2) sur une extension de pôle (32) ;
- pré-disposer un bouclier externe (20) ayant une ouverture (21) située au niveau de ladite extension de pôle (32), qui peut être traversé par ledit voile (2), ledit bouclier (20) étant constitué par une seule partie, ou par plusieurs parties adjacentes (26, 27) agencées de manière à définir une dite ouverture (21) ;
- combiner ledit voile de protection (2) et ledit bouclier (20) de telle sorte que la limite de ladite ouverture (21) et les bords externes dudit voile (2) définissent un cadre en forme de fente à l'intérieur de laquelle le câble (3) est inséré ;
- enrouler ledit câble (3) autour dudit pôle, ledit câble (3) suivant des trajectoires forcées dans ladite fente en forme de cadre.

2. Procédé pour l'enroulement des noyaux à pôles multiples, selon la revendication 1, dans lequel ledit voile (2) se déplace de manière radiale, avec un mouvement alterné vers / à partir du noyau pour recouvrir le pôle respectif et réaliser l'étape d'enroulement grâce à la rotation de la pale, ledit mouvement alterné se produisant à travers ladite ouverture (21).

3. Machine pour l'enroulement des noyaux à pôles multiples comprenant au moins une pale et un voile (2) qui recouvre le pôle respectif de telle sorte que la pale enroule le câble (3) autour dudit pôle, **caractérisée en ce qu'**elle comprend :
- un bouclier (20) ayant une ouverture (21) traversée par ledit voile de protection (2), de telle sorte que la limite de l'ouverture (21) dudit bouclier (20) et les bords extérieurs dudit voile (2) définissent une fente en forme de cadre dans laquelle le câble (3) est obligé de s'enrouler, dans laquelle ledit bouclier (20) est constitué par une seule partie, ou par plusieurs parties adjacentes (26, 27) agencées de manière à définir une dite ouverture (21).

4. Procédé pour l'enroulement des noyaux à pôles multiples, conforme à la revendication 3, dans lequel ledit bouclier (20) a une première et une deuxième faces opposées (22, 23) qui communiquent à travers ladite ouverture (21) ; pendant l'étape d'enroulement, ladite première face (22) dudit bouclier (20) étant opposée audit noyau enroulé et ladite seconde face (23) étant orientée vers ledit noyau pour être enroulée, ledit câble (3) coulissant sur ladite première face (22) et contre les bords extérieurs de ladite ouverture (21).

5. Machine pour l'enroulement des noyaux à pôles multiples, selon la revendication 3, dans laquelle lesdites parties adjacentes (26, 27) peuvent se rapprocher ou se séparer.

6. Machine pour l'enroulement des noyaux à pôles multiples, selon la revendication 3, dans laquelle ledit bouclier (20) peut se déplacer de manière radiale par rapport au noyau, pour se détacher plus ou moins du pôle pour des phases d'enroulement particulières.

7. Machine pour l'enroulement des noyaux à pôles multiples, selon la revendication 4, dans laquelle ledit bouclier (20) est un bouclier noir sur la seconde face duquel (23) est créé un renfoncement (24) dans lequel les pôles (32) se trouvent à côté du pôle traité (32).

8. Machine pour l'enroulement des noyaux à pôles multiples, selon la revendication 3, dans laquelle ladite limite de ladite ouverture (21) dudit bouclier (20) a un profil arrondi pour éviter d'endommager le câble (3) pendant l'enroulement.
